# EUROPEAN PATENT APPLICATION

(11) **EP 1 772 820 A1**
(43) Date of publication of application: **11.04.2007**
(21) Application number: 05300801.7
(22) Date of filing: 07.10.2005
(51) Int. Cl.: G06Q 10/00

(54) **Prediction of service Level Compliance in IT infrastructures**

(71) Applicant: Hewlett-Packard Development Company, L.P., Houston, TX 77070 (US)
(72) Inventor: Collomb, Jean-Michel, 06901 Sophia-Antipolis (FR); Laye, Christophe, 06901 Sophia-Antipolis (FR)
(74) Representative: Lloyd, Richard Graham

(57) **Abstract**

A method is provided of predicting a degree of service-quality compliance in an IT infrastructure. The method is carried out at a current point of time within an evaluation period before the end of the evaluation period, wherein service-quality compliance means that a service-quality parameter of the IT infrastructure complies with a service-quality objective. The method includes obtaining a statistic which indicates probabilities that the service-quality parameter will comply with the service-quality objective in sub-periods of the future part of the evaluation period. The statistic is based on known compliance frequencies in equivalent sub-periods in the past. A calculation, on the basis of the statistic, indicates an estimated duration in which the service-quality objective will be complied with during the future part of the evaluation period.

## Description

### FIELD OF THE INVENTION

The present invention generally relates to methods, systems and computer program products for the real-time reporting of service level agreements, and for example, to methods, systems and computer program products for predicting whether a service level agreement will be complied with.

### BACKGROUND OF THE INVENTION

With IT infrastructures having emerged from a purely scientific environment into almost all companies, their economic aspects have continuously gained in importance over recent decades, so that nowadays numerous companies heavily rely on some sort of IT infrastructure (e.g. information servers, such as Web or database servers). Depending on the size and sophistication of a company, however, it may not be possible or practical to maintain the IT infrastructures in-house. Accordingly, some companies, such as electronic data processing centers (EDPC), offer servers and communication outsourcing services.

This development entails that nowadays IT infrastructures are not only an issue in computer science, but also in business administration where economic implications of IT infrastructures are researched. In this realm, attention is drawn, for instance, to the question of how a company (in this context a service provider) leasing out an IT infrastructure or services made available by means of an IT infrastructure may contractually assure to a customer that the IT infrastructure or the services leased out comply with conditions agreed upon in advance. These conditions usually concern the "quality-of-service" (QoS) which may refer to characteristics of the services themselves, such as availability, performance, reliability, transmission delay, bandwidth and up-time, but may also refer to the capability of the service provider to repair the IT infrastructure in the event of an outage. A set of contract conditions in relation to target compliances and sanctions concerning consequences in the case that the target compliances are not fulfilled are usually referred to as a service level agreement. In formal terms, a service level agreement (SLA) is a contract that formalizes a business relationship, or part of the relationship, between two parties. Most often, it takes the form of a negotiated contract made between a service provider and a customer and defines a price paid in exchange for an entitlement to a product or service to be delivered under certain terms, conditions, and with certain financial guarantees (cf: Lee, J. J., Ben-Natan, R., "Integrating Service Level Agreement", Wiley Publishing Inc., 2002, p.3).

The TeleManagement Forum's SLA Management Handbook defines an SLA as "[a] formal negotiated agreement between two parties, sometimes called a service level guarantee. Typically, it is a contract (or part of one) that exists between the service provider and the customer, designed to create a common understanding about services, priorities, responsibilities, etc."

Historically, service level agreements arose in the early 1990s as a way for measuring and managing quality of service (QoS) that IT departments and service providers within private (usually corporate) computer networking environments delivered to their internal customers. It is foreseeable that the use of service level agreements will soon become the prevailing business model for delivering a large number of services. Service level agreements offer service providers the ability to distinguish themselves from competitors in today's volatile markets while providing a measure of security for their customers.

During the evaluation period of a service level agreement, a service provider may be interested in the likelihood that the conditions agreed upon with the customer will be complied with at the end of the evaluation period of an SLA. To this end, the service provider may be endowed with a prediction unit as part of a service level reporting unit which informs the service provider whether or not the service level agreement will be complied with. If the prediction unit notifies the service provider that the service level agreement will prospectively not be complied with, the service provider may preemptively react to this notification by allocating more reliable network resources, such as servers etc., in order to avoid any breaching of the service level agreement.

WO 02/42923 discloses a method, system, and computer program product for monitoring services (e.g., communications services and information server services) for compliance with a specified set of target criteria (e.g., as specified in a contract). The document also discloses a monitoring computer system including a prediction engine that uses large quantities of data that are gathered by measurements agents. With reference to historic data, the prediction engine analyzes whether current problems are indicators of future problems.

US 6,556,659 discloses a service level management system which includes a proactive threshold manager that alerts service providers to a risk that a certain level of service is in danger of being breached. The proactive threshold manager provides an indication or alarm if the current level of service is within a predetermined range regarding the minimum service level which needs to be provided to subscribers. The alert is given in due time so that the provider has enough time to remedy the problem before a service level agreement is breached. The service level management system also includes a data-mining unit that provides the capability to analyze network management data looking for patterns and correlations across multiple dimensions. Thereby, models of data behavior are constructed in order to predict future growth or problems and facilitate a proactive management of the network.

US 6,801,945 discloses systems and methods for the prediction of visitor traffic to a network of web site pages. The system also considers annual seasonality, day-of-week, holidays, special events, short histories, user demographics, user web behavior (viewing, listening and transacting) and parent and child web page characteristics.

US 2002/0152305 discloses a method of analyzing resource utilization information. The method is based on historical tracking of system performance parameters, such as resource availability and/or usage, adherence to provisioned SLA policies, content usage patterns, time-of-day access patterns, etc. Furthermore, a data analysis module is disclosed which is capable of predictive analysis, such as resource-utilization forecasting, processing engine requirement projections. A short term forecast algorithm is disclosed which is capable of predicting system workload for any desired selected unit of time based on historical resource utilization load on the system and/or given processing engine(s). Moreover, a long-term trend algorithm is mentioned which is capable of predicting an overall trend line and growth pattern for system workload and/or workload of a given processing engine.

### SUMMARY OF THE INVENTION

A method is provided of predicting a degree of service-quality compliance in an IT infrastructure. The method is carried out at a current point of time within an evaluation period before the end of the evaluation period, wherein service-quality compliance means that a service-quality parameter of the IT infrastructure complies with a service-quality objective. A statistic is obtained which indicates probabilities that the service-quality parameter will comply with the service-quality objective in sub-periods of the future part of the evaluation period. The statistic is based on known frequencies in equivalent sub-periods in the past. A calculation on the basis of this statistic indicates an estimated duration in which the service-quality objective will be complied with during the future part of the evaluation period.

According to another aspect, a method is provided of predicting a degree of service -availability compliance in an IT infrastructure. The method is carried out at a current point of time within an evaluation period before the end of the evaluation period, wherein service- availability compliance means that a service of the IT infrastructure is available. A statistic is obtained which indicates probabilities that a service will be available in sub-periods of the future part of the evaluation period. The statistic is based on known frequencies in equivalent sub-periods in the past. A calculation on the basis of this statistic indicates an estimated duration in which the service will be available during the future part of the evaluation period.

According to another aspect, a computer system is provided for predicting a degree of service-quality compliance in an IT infrastructure at a current point of time within an evaluation period before the end of the evaluation period, wherein service-quality compliance means that a service-quality parameter of the IT infrastructure complies with a service-quality objective. The computer system is programmed to obtain a statistic indicating probabilities that the service-quality parameter will comply with the service-quality objective in sub-periods of the future part of the evaluation period. The statistic is based on known compliance frequencies in equivalent sub-periods in the past, and to calculate, on the basis of the statistic, an estimated duration in which the service-quality objective will be complied with during the future part of the evaluation period.

According to another aspect, a computer program product is provided which is either in the form of a machine-readable medium with program code stored on it, or in the form of a propagated signal comprising a representation of program code. The program code is arranged to carry out a method, when executed on a computer system, of predicting a degree of service-quality compliance in an IT infrastructure at a current point of time within an evaluation period before the end of the evaluation period, wherein service-quality compliance means that a service-quality parameter of the IT infrastructure complies with a service-quality objective. A statistic is obtained which indicates probabilities that the service-quality parameter will comply with the service-quality objective in sub-periods of the future part of the evaluation period. The statistic is based on known frequencies in equivalent sub-periods in the past. A calculation on the basis of this statistic indicates an estimated duration in which the service-quality objective will be complied with during the future part of the evaluation period.

Other features are inherent in the methods and products disclosed or will become apparent to those skilled in the art from the following detailed description of embodiments and its accompanying drawings.

### BRIEF DESCRIPTION OF THE DRAWINGS

Embodiments of the invention will now be described, by way of example, and with reference to the accompanying drawings, in which:
Fig. 1 shows a local area network (LAN), on which embodiments of the invention are based, coupled to the Internet, including network devices containing metric adapters for transmitting measured metric values to an SLA reporting station;
Fig. 2 shows a definition of an exemplary service level objective;
Fig. 3 illustrates database access time (daily averaged) as a metric, which is subject to a weekly cycle, over a period of 16 days;
Fig. 4 shows a first statistic, according to embodiments of the invention, indicating probabilities that the access time from a service access point to a database management system of the IT infrastructure is shorter than 0.3 seconds for different days of the week;
Fig. 5 shows a measured compliance percentage of the service level objective of Fig. 2 during the elapsed part of a first evaluation period and an estimated SLO compliance percentage for the end of a first evaluation period;
Fig. 6 shows calculations in an embodiment of the invention for obtaining an estimated SLO compliance percentage for the end of the first evaluation period;
Fig. 7a illustrates a service level objective relating to several metrics of different network resources;
Fig. 7b illustrates a tree representation of the service-quality condition of the service level objective of Fig. 7a;
Fig. 8 displays a second statistic, according to embodiments of the invention, indicating probabilities that a service, with regard to the service level objective as illustrated in Fig. 7a, is available during two hour periods of a day;
Fig. 9 shows an SLO compliance percentage of the service level objective of Fig. 7a during an elapsed part of a second evaluation period and an estimated compliance percentage for the end of the second evaluation period;
Fig. 10 shows calculations, in an embodiment of the invention, being performed for obtaining an estimated SLO compliance percentage for the end of the second evaluation period, and to indicate a violation period in the future part of the evaluation period, during which a point of time occurs from that onward the service level objective is violated;
Fig. 11 displays a re-calculation, in an embodiment of the invention, of estimated compliance percentages pertaining to a point of time two hours after the calculations shown in Fig. 10;
Fig. 12a shows a flowchart indicating the course of process of calculating an estimation of an availability percentage for the end of the second evaluation period, and calculating a violation period in the future part of the evaluation period, during which a point of time occurs from that onward the service level objective is violated;
Fig. 12b shows a flowchart illustrating the course of action of collecting metric values, evaluating a service-quality condition tree and of updating the statistic;
Fig. 13 is a diagrammatic representation of an embodiment of an SLA reporting station.

The drawings and the description of the drawings are of embodiments of the invention and not of the invention itself.

### DESCRIPTION OF THE PREFERRED EMBODIMENTS

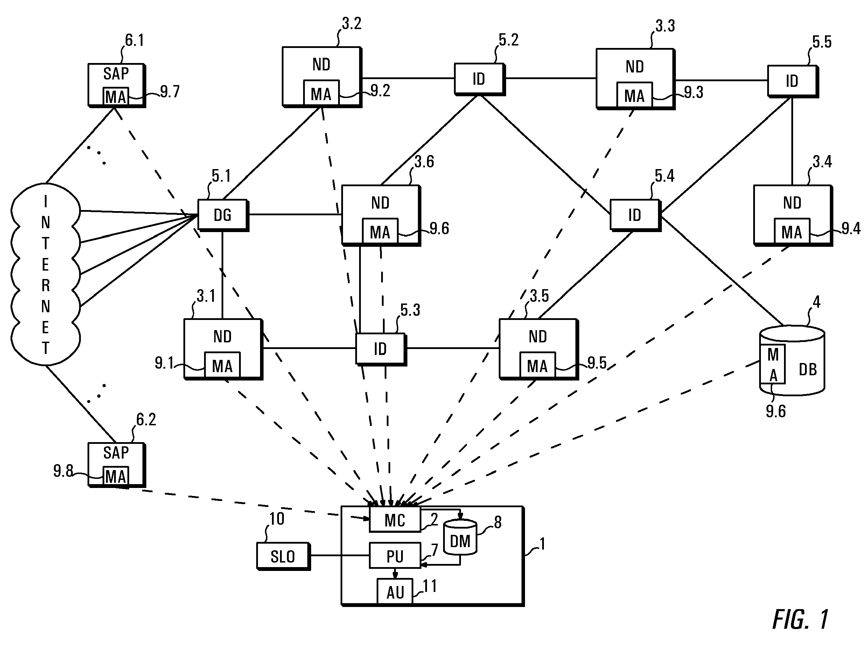

Fig. 1 shows an IT infrastructure including a prediction unit for estimating compliance of service level agreements. However, before proceeding with the description of Fig. 1 a few items of the embodiments will be discussed.

In some of the embodiments, a degree of service-quality compliance in an IT infrastructure is predicted. The prediction is made at a current point of time within an evaluation period before the end of the evaluation period. As will be discussed in more detail below, service-quality compliance means that a service-quality parameter of the IT infrastructure complies with a service-quality objective. To perform the prediction, a statistic indicating probabilities that the service-quality parameter will comply with the service-quality objective in sub-periods of the future part of the evaluation period is obtained. In some of the embodiments, the statistic is based on known compliance frequencies in equivalent sub-periods in the past. An equivalent sub-period is, for example, the same day of a week, or the same hourly interval during a day. On the basis of the statistic, an estimated duration is calculated in which the service-quality objective will be complied with during the future part of the evaluation period.

It should be mentioned that the term "IT infrastructure" as used herein refers to both computer networks and telecommunication networks.

A service level agreement (SLA) is a contract, in which a customer wishing to use a service, typically based on network resources, and a provider supplying the desired service agree upon the service itself, performance levels, responsibilities and modalities, such as the time period during which the provider makes available the service. The term "service", as used herein, may refer to either providing one or more network resources as hardware entities or providing hardware entities on which application programs are installed, which the customer is entitled to access. Performance levels indicate the availability of the service the customer and the provider have agreed upon. In general, executing an SLA contractually sets the customer's expectations regarding a product's delivery. Once defined, agreed to, and executed, the terms and conditions that make up the bulk of the SLA contract become the customer's entitlements with respect to the service. This warranty enables the customer to plan and operate his or her business with a reasonable level of confidence in the availability, performance, or timeframe of a contracted service (cf., for example, J. Lee et al., "Integrating Service Level Agreements", p. 8, Wiley Publishing, 2002).

Typically, a customer may choose among different service level options, which are frequently referred to as platinum, gold, silver, bronze, etc. each of them guaranteeing a different service level - with platinum as the highest service level option. Thereby, a customer is able to select a service level option corresponding to his/her requirements, and different service level options may be agreed upon for different time periods. For instance, a customer leasing an IT infrastructure for an online shop, decides for a platinum service level option during the day and a silver service level option during the night since most purchases are made during the day.

Service level agreements also constitute an endorsement for the service provider since s/he is well aware of a customer's expectations and may therefore better attune to them. The provider is able to plan his/her IT infrastructure according to the conditions to which s/he has committed himself/herself in the service level agreement.

A service level agreement typically relies on metrics relating to network resources of an IT infrastructure. There are two main types or classifications for SLA metrics. The first type measures the quantity, quality, availability, and level of service delivered by the IT infrastructure. The measurement is based on the ability of the service provider to compile statistics from the network elements themselves using automated reporting generated from a network management function. These measurements are sometimes referred to as infrastructure metrics

Infrastructure metrics may include the following: available capacity, available throughput, discarded packets, discarded frames, access time, resource availability, resource utilization, etc. The second type of metrics measures the provider's ability to provide resources to deploy, operate, and maintain the services at the level contracted for. The primary focus of this type of metrics is to measure the performance of the service provider's operations infrastructure (technical support) relative to activities that affect the ability of the network to deliver the services. These are sometimes referred to as infrastructure independent metrics and include the following: mean time between failures (MTBF), mean time to provision (MTTP), mean time to repair (MTTR), etc.

A typical service level agreement includes, besides a description of the service itself (what is provided, during which time, to which customer, etc.) and the penalties in the event of non-compliance, a definition indicating which objective the service has to meet; for example, if the service level agreement refers to service availability, this will be a definition of when the service is assumed available. Such a definition is referred to as service-quality condition, if it refers to a point of time. If an evaluation period is considered, within which the service-quality condition has to be fulfilled during a certain duration, typically indicated as a percentage value (target service level objective compliance), then the term "service level objective" (SLO) is used. A service-quality condition is preferably represented in the form of a tree and basically represents a condition involving one or more metric values. A service-quality condition is a service-quality parameter of one or more resources of the IT infrastructure in comparison to a service-quality objective. The evaluation of a service-quality condition yields the compliance of a service-quality parameter, i.e. a True/False (or 1/0) answer, whether the service-quality parameter is above or below a service-quality objective. A service-quality parameter is associated with a node of the second-highest level of a service-quality condition tree, i.e. before the comparison with a service-quality objective. In some of the embodiments, the service-quality parameter is elementary in that it refers to only one metric being compared with a service-quality objective, whereas in other embodiments, the service-quality parameter is a composite service-quality parameter referring to the evaluation of a complex condition comprising several metrics. Furthermore, a service level objective is put in relation to a target SLO compliance, which is typically a percentage value, indicating which percentage portion of the entire evaluation period of an SLO the service-quality condition has to be complied with, so that the SLO is complied with.

In an SLA environment, a service provider normally wishes to receive reports about values pertaining to metrics, or generally about a service-quality parameter, on a nearly real-time basis. As mentioned above, in some of the embodiments, the service-quality parameter is elementary in that it refers to a single metric being compared with a service-quality objective. In other embodiments, the service-quality parameter is a composite service-quality parameter referring to the evaluation of a complex combination of several elementary metrics. Metric values are transmitted from metric adapters to a metric collector at a central SLA reporting station. However, from a customer's perspective, a relevant point of measurement may be the one that is contractually defined in the SLA as the service access point (SAP). Therefore, in some of the embodiments metric adapters are not only used for the network devices of the IT infrastructure leased out by the service provider, but are also provided at the SAPs. An SAP is the physical termination point (or device) where the service provider's responsibilities end and those of the customer begin. Delivery of the service to the SAPs is usually the customer's only concern within the entire network. Thus, in some of the embodiments, products and services delivered under SLAs are measurable at the SAPs.

SLAs are intended to guarantee the service provider's performance at a predefined quality-of-service (QoS) level at a designated service access point (SAP). QoS is defined by the International Telecommunications Union (ITU-T) as "the collective effect of service performances, which determine the degree of satisfaction of a user of the service. The quality of service is characterized by the combined aspects of service support performance, service operability performance, service integrity and other factors specific to each service." To ensure performance, service provider performance at the SAPs is tied to a set of financial penalties. The intent is to penalize non-compliance in order to provide motivation for service providers to deliver SLA-compliant performance. Quality of service has become the standard by which service providers are judged. The focus of QoS has shifted away from the service provider's point of view towards the network technology and instead is homing in on the impact of availability on the customer's business. The financial models of SLAs have not kept pace with this evolution. Pricing can be expected to evolve from the current provider-focused penalty-formulation methodology to one that is much more aligned to the business impact experienced by the customer.

Exemplarily, according to a provider-centric methodology, a penalty, which is 1.00% of the invoiced service charge for the affected customer of the service for a given month, is credited to a customer for each 0.10 percent below the performance requirement. However, this penalty does not refer to the business losses that are entailed by non-compliance with the performance requirement agreed upon.

Therefore, the intent of a business-impact approach is to mitigate the business risks associated with total dependence on the telecom service provider, which is obviously much more closely aligned to the true intent of SLAs as used by customers today. For instance, a customer having an online shop is interested that its website is available in 99.98% of the evaluation period of an SLA within 3 seconds for a potential purchaser accessing the website and wants this condition to be incorporated into the SLA. If the service provider fails to guarantee that condition, the customer desires a monetary compensation according to his/her business losses. However, the business losses that occurred as a direct result of the non-compliance with the SLA cannot be measured objectively, so that the business- impact approach is still uncommon. What will most likely evolve is the use of different types of historical data and statistical averages for sales transactions to compare the period of SLA non-compliance with a comparable period. Currently, service providers are still reluctant to accept business impact penalty pricing.

In order to avoid SLA violations, a provider is interested in being informed about possible SLA violations before they actually occur. To this end, predicting whether an SLA is likely to be breached may typically be performed by extrapolating at a current point of time the current compliance percentage to the entire time interval of the SLA in order to estimate whether the SLA is likely to be complied with. For instance, if the total evaluation period of an SLA is 10 days, and during the 8 days that have elapsed, the service has been unavailable during 1 hour (current compliance percentage 99.58%), then it will probably be unavailable during 1.25 hours during the total evaluation period, yielding an estimated compliance percentage of 99.48%, on the supposition that the availability of the service in the future will be the same as it has been during the elapsed part of the evaluation period. (It should be mentioned that compliance percentages are always indicated with regard to the entire evaluation period of the SLA.) If a target SLO compliance of 99.50% has been agreed upon in the SLA, then the SLA is likely to be breached. However, it could be the case that the two remaining days fall on a weekend, so that there might still be a chance that the SLA may be complied with (for instance, if the SLA refers to an access time which is typically smaller during weekends since fewer people access the network resource). The results of this way of predicting compliance of SLAs are better, the closer the time is to the end of the evaluation period of the SLA.

In some of the embodiments, a degree of service-quality compliance in an IT infrastructure is predicted at a current point of time within an evaluation period before the end of the evaluation period. Service-quality compliance means that a service-quality parameter of the IT infrastructure complies with a service-quality objective. A statistic is obtained which indicates probabilities that the service-quality parameter complies with the service-quality objective in sub-periods of the future part of the evaluation period. The statistic is based on known compliance frequencies in equivalent sub-periods in the past. On the basis of the statistic, an estimated duration is calculated in which the service-quality objective will be complied with during the future part of the evaluation period. In some of the embodiments, a service-quality condition is a metric of a resource of the IT infrastructure in comparison to a threshold which is used to determine whether a service-quality parameter (in this case the metric) complies with the service-quality objective. An example of a elementary service-quality condition is "database_access_time < 0.3 sec.". In other embodiments, a service-quality condition involves several metrics which are evaluated to one composite service-quality parameter. To calculate the estimated duration during which the service-quality parameter will comply with a service-quality objective, a statistic is obtained, which indicates probabilities that the service-quality parameter complies with the service-quality objective in sub-periods of the future part of the evaluation period. In some of the embodiments, the statistic is based on known frequencies in equivalent sub-periods in the past. An equivalent sub-period is, for example, the same day of a week or the same hour(s) of a day. The recurring time interval may be a day, a week, a month, a year according to a cyclical behavior of the service-quality parameter and is subdivided into smaller sub-periods. For each sub-period, it is indicated whether the service-quality condition is complied with in this sub-period. On the basis of the statistic, the estimated duration in which the service-quality condition is complied with during the future part of an evaluation period is calculated.

In other embodiments, the calculated estimated duration is used to calculate an estimated SLO compliance for the end of the evaluation period at a current point of time before the end of an evaluation period. A service level objective is defined as a service-quality condition in comparison to a target SLO compliance, which is typically indicated as a percentage value. An example of a service level objective is "(database_access_time < 0.3 sec) > 99.98%". This means that the service-quality condition needs to be fulfilled in 99.98% of the service-quality parameter values obtained (which may be obtained for example each second or minute during the evaluation period) is complied with. In the given example, the target SLO compliance is 99.98%. To calculate the estimated SLO compliance, the elapsed part of the evaluation period, which is the time from the beginning of the evaluation period to the current point of time, is also considered. The duration is measured, during which the service-quality condition has been complied with during the elapsed part, and is added to the estimated duration in which the service-quality condition will be complied with during the future part of the evaluation period. This sum is used to calculate an estimated SLO compliance for the end of the time interval.

In other embodiments, the service-quality parameter refers to availability of a service which may be the availability of a network resource, such as an up/down metric of a network device, whereas in other embodiments, availability refers to a service which includes metrics of several network resources. In the context of availability, the service-quality objective, to which the service-quality parameter is compared, is "1" indicating that the service needs to be available to comply with the service-quality objective. The service-quality parameter either adopts the value "0" if the service is unavailable and adopts the value "1" if the service is available.

In some of the embodiments, a degree of service availability compliance is predicted in an IT infrastructure, wherein service availability is complied with, if the service is available. At a current point of time within an evaluation period before the end of the evaluation period, a statistic is obtained which indicates probabilities that a service will be available in sub-periods of the future part of the evaluation period. The statistic is based on known availability frequencies in equivalent sub-periods in the past. A calculation on the basis of the statistic indicates an estimated duration in which the service will be available during the future part of the evaluation period.

In some of the embodiments, a recurring time interval is determined by analyzing the cyclic pattern of the service-quality parameter. When analyzing access time of a database server, it may be ascertained, for example, that the access time is approximately the same on every Monday, Tuesday, etc. and that the access time is significantly shorter at weekends. Then, it is adequate to assume that a week is the recurring time interval which is subdivided into sub-periods, such as a day. In other embodiments, it is adequate to assume that a day is a recurring time interval, since each day shows approximately the same behavior of a service-quality parameter. A day can, for example, be further subdivided into shorter sub-periods, such as one- or two-hour intervals. All service-quality parameter values showing the same behavior may therefore be summarized into equivalent sub-periods, i.e. the service-quality parameter values of all Mondays, all Tuesdays, all Wednesdays, etc. are associated to one sub-period, respectively. In some of the embodiments, all workdays are considered as one equivalent sub-period of the statistic, and all holidays are considered as another equivalent sub-period.

In some of the embodiments, cyclic patterns are determined by means of mathematical analysis of existing samples, such as Fast Fourier Transformation or Wavelets.

In some of the embodiments, the recurring time interval is determined on the basis of experience values of an IT infrastructure operator who knows or who may estimate cyclic patterns of service-quality parameters.

In other embodiments, the recurring time interval is arbitrarily chosen based on the evaluation period. For instance, in the case of weekly evaluation periods, a statistic is computed for every hour of the week to cover cyclic patterns based on the hours of a day and the days of a week. For monthly and quarterly evaluation periods, a statistic is computed for every day of the week.

In some of the embodiments, more than one statistic is calculated, for instance, one statistic for the days of a week and one statistic for the days of a quarter. Values from both statistics are then combined to estimate predictive compliance.

In other embodiments, if the estimated SLO compliance is insufficient with regard to the target SLO compliance, an estimated violation interval is calculated, during which a violation of the target SLO compliance occurs for the first time (violation point). This is done by calculating estimated SLO compliances for some points of time in the future part, starting with the points of time closest to the current point of time, and finding the first point of time, at which the target SLO compliance is violated (point of time P2). The violation interval is then the interval starting at a point of time at which the target SLO compliance is still complied with (point of time P1) and ends with P2. In some of the embodiments, the points of time P1 and P2 lie sufficiently close together, so that the violation interval may then be considered as a violation point. The determination of a violation point may be performed by narrowing down the time interval between P1 and P2.

In some of the embodiments, the user is alerted by an audio and/or visual signal, if the calculation shows that the estimated SLO compliance is insufficient for the target SLO compliance. Moreover, the user is informed about the violation interval. This allows the user to take preemptive measures, such as upgrading network resources, in order to avert a violation of the SLA. If the violation cannot be averted, since the violation point is in the very near future, the violation may at least be mitigated which may reduce the contract penalty stipulated in the SLA.

In some of the embodiments, the statistic is permanently updated in response to the receipt of new metric values or calculations of the values of service-quality parameters. For instance, if the statistic says that the probability that (database_access_time < 0.3 seconds) is 100% and metric values delivered indicate, that the database_access_time is currently 0.5 seconds, then the statistic is immediately corrected downwardly.

Service-quality parameters values, being based upon metric values, are collected over a long period of time, and are represented in the statistic with reference to a shorter, recurring time interval. This is due to the fact that, in many cases, reasonable estimations concerning compliance of service level objective can only be made if the service-quality parameter values measured are subject to a cyclic pattern. It is often the case, that the access time is subject to a weekly cycle, which means that the access time every Tuesday is approximately the same and it is probably longer than the access time on Sundays since fewer people access the database on Sundays than on Tuesdays. Therefore, in order to obtain the statistic includes determining the cyclic pattern of the service-quality parameter, and this is then used as the recurring time interval. If one wishes, for example, to estimate a service-quality condition compliance for a future part of an evaluation period which includes a national holiday during the week (i.e. not at the weekend), then it may be advisable to use a statistic based upon service-quality parameter values derived from weeks with a holiday on the same day. The use of a statistic indicating compliance probabilities for weeks without a holiday would distort the estimation.

In some of the embodiments, the estimated duration is calculated by means of the expectancy value, which is defined as the sum of probabilities that the service-quality condition is complied with multiplied by the lengths of the sub-periods of the future part of the evaluation period.

In some of the embodiments, the estimated duration in which the service-quality condition is complied with is re-calculated periodically in order to increase its accuracy. As time progresses, the future part of the evaluation period gets shorter. Consequently, the calculation of the estimated duration in which a service-quality condition is complied with during the entire evaluation period becomes less probabilistic and increasingly based on factual measurements.

In some of the embodiments, the statistic is obtained from a service level management reporting datamart storing historical data from the individual network resources.

Some of the embodiments of the computer program product with program code for performing the described methods include any machine-readable medium that is capable of storing or encoding the program code. The term "machine-readable medium" shall accordingly be taken to include, for example, solid state memories and, removable and non removable, optical and magnetic storage media. In other embodiments, the computer program product is in the form of a propagated signal comprising a representation of the program code, which is increasingly becoming the usual way to distribute software. The signal is, for example, carried on an electromagnetic wave, e.g. transmitted over a copper cable or through the air, or a light wave transmitted through an optical fiber. The program code may be machine code or another code which can be converted into machine code, such as source code in a multi-purpose programming language, e.g. C, C++, Java, C#, etc. The embodiments of a computer system may be commercially available general-purpose computers programmed with the program code.

Returning now to Fig. 1, the diagram shows a local area network (LAN) including six network devices (3.1-3.6), whereby network device 3.5 is a Web server and network devices 3.3 and 3.4 are high performance mainframe computers especially designed for tasks requiring considerable processor power. The local area network further includes a database management system 4 for storing large amounts of data in a relational database scheme. The network devices 3.3-3.5 and the database management system 4 are the hardware resources being referred to in the SLA. As will be explained below, some of the network devices 3 and the database management system 4 are entities which provide services to external customers 6.1, 6.2 which are coupled to the LAN via the Internet and access the services via service access points (SAPs). The network devices 3 and the database management system 4 are connected to each other by means of interconnect devices (5.1-5.5), whereby interconnect device 5.1 is a router which couples the LAN to the Internet. The router 5.1 is referred to as a default gateway router since it represents a gate between the LAN and the Internet. LAN resources, which are the network devices 3, the database management system 4 and applications running on them, are operated by a service provider; this provider rents out LAN resources to external customers 6.1, 6.2, which are coupled to the LAN via the Internet, and which wish to avail themselves of the resources in return for payment. The customers 6.1, 6.2 are actually represented by the network devices by means of which they access the services rented. These network devices are also referred to as SAPs. Since the service provider and the customers 6.1, 6.2 usually commit themselves to a contract, such as a service level agreement, when entering into a business relationship an SLA reporting station 1 is provided. To this end, the SLA reporting station 1 enables monitoring the resources rented out by the service provider to be monitored, so that both contracting parties may check whether the conditions agreed upon are met. As noted above, service level agreements are related to metrics which are measurable quantities referring to the resources involved in the service level agreement. The metrics are measured in the network devices 3 and the database management system 4 of the IT infrastructure by means of metric adapters 9.1-9.8. These are software or hardware entities that are responsible for measuring metric values and transmitting them to a metric collector 2 located in the SLA reporting station 1. However, the service access points are also equipped with metric adapters 9.7, 9.8 which are designed to measure and transmit metric values which can only be measured from there, such as the access time to the database management system 4 or to the web server 3.5. The metric collector 2 in the SLA reporting station 1 is further coupled to a datamart 8 which is a specialized data warehouse allowing for strategizing based on past trends and experiences. The datamart 8 stores the data, such as access time of the database management system 4 collected by the metric collector 2, and enables the user to further evaluate the data. The SLA reporting station 1 also includes an SLA prediction unit 7 which is capable of estimating at a point of time within an evaluation period pertaining to an SLA 10, whether the service level objective 10 will be complied with at the end of the evaluation period. If the estimation yields a probable non-compliance of the SLO 10, the unit will indicate a time interval (violation interval) in the future part of the evaluation period, during which a point of time occurs after which the SLO 10 will be violated.

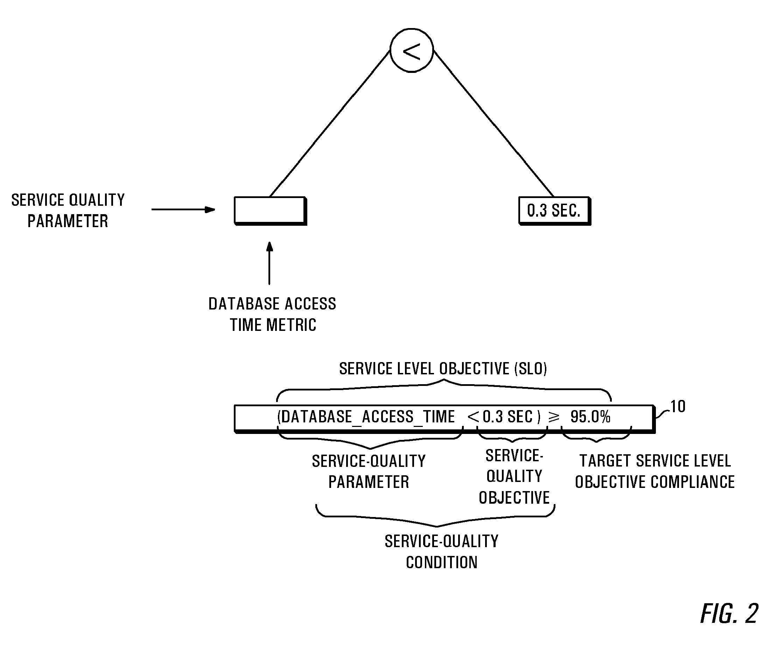

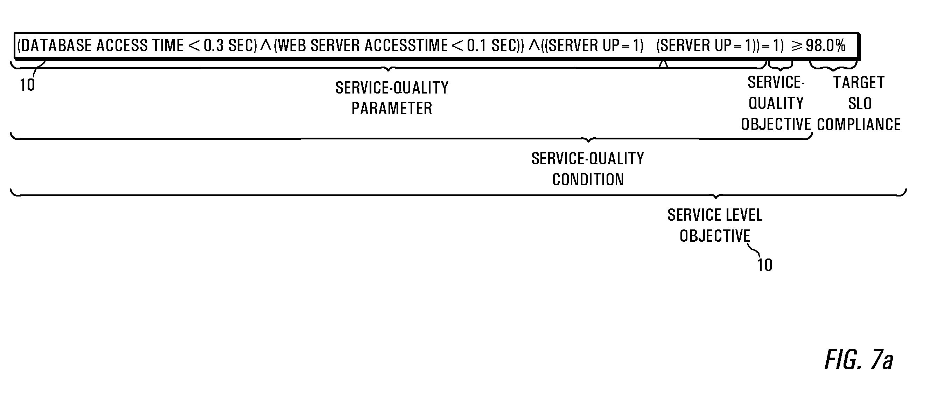

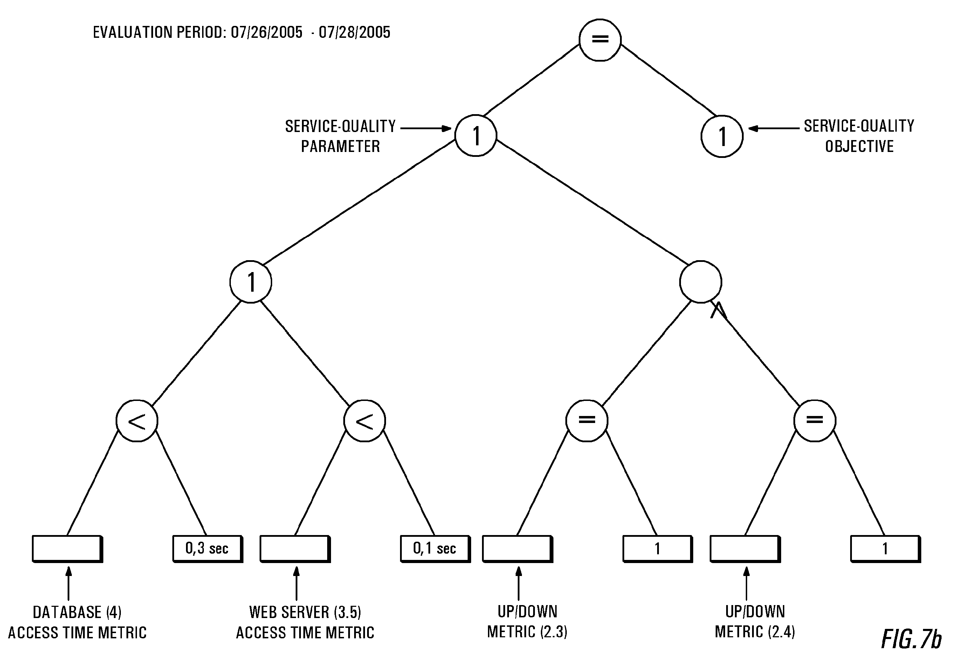

Fig. 2 illustrates a further example of the service level objective 10 of Fig. 1, namely "(database_access_time < 0.3 sec) ≥ 95.0%". This service level objective is elementary in that its service-quality parameter refers to only one metric. The SLO is fulfilled, if, during the evaluation period agreed upon, the access time of the database management system 4 is less than or equal to 0.3 seconds in 95.0% of the cases when the database management system 4 is accessed by means of a polling mechanism from one of the service access points of the customers 6.1, 6.2. Above the SLO 10, a service-quality condition tree is illustrated, which shows the service-quality condition of the SLO 10. The measured value of the metric "database_access_time" is indicated by means of an arrow. The evaluation of this logical expression yields the value "0" (False) or "1" (True), depending on whether the measured database_access time is less or greater than 0.3 seconds. The depiction of a service-quality condition as a tree will be revived in Fig. 7 in the context of a service whose composite service-quality parameter refers to several metrics.

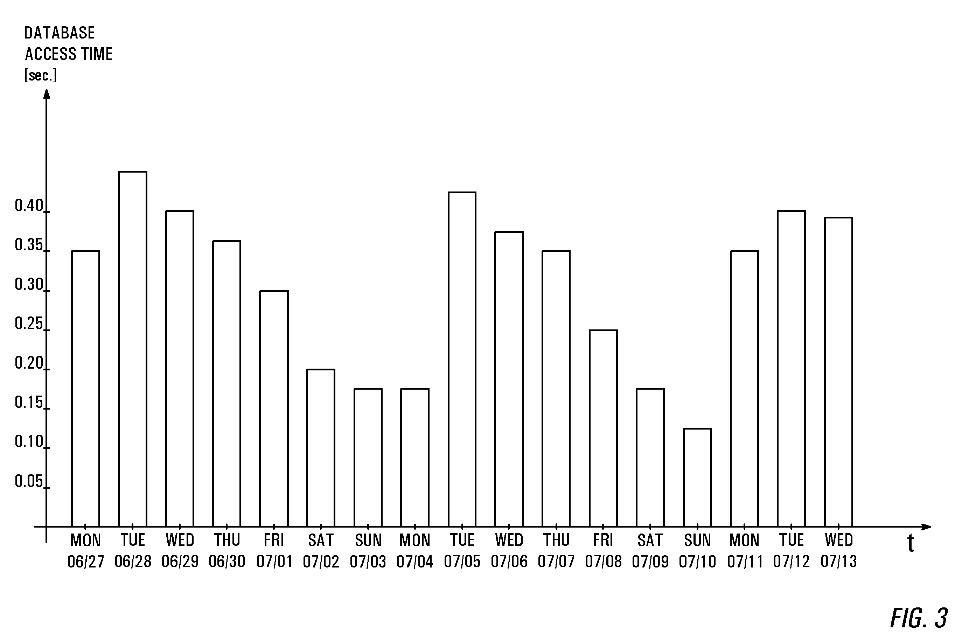

Fig. 3 exhibits an exemplary diagram indicating database access times of the database management system 4 during a certain time interval, here, for example, June 27th to July 13th 2005. The access times result from evaluations and measured access times from the service access points stored in the datamart 8 and allow for historical observations. Each column of the diagram shows an average access time of each individual day considered in the time span of the diagram. As can be seen from the diagram, the depicted average access times are subject to cyclical variations. In the given example, the database access time varies in a weekly rhythm, which allows future behavior to be estimated on the basis of historical observations. The week-cyclical access times of the database management system 4 may be explained by the fact that on different days of the week, a different number of persons access the database management system 4. Especially during weekends (i.e. non-workdays), the number of times it is accessed is significantly lower than on workdays. When the database management system 4 is accessed by a larger number of customers, this entails an increase of the access time to the database management system 4. Attention is drawn to the fact that on July 4th 2005, the average access time is significantly smaller than on other Mondays. This is due to the fact that July 4th (Independence Day in the USA) is a holiday on which, in the example given, the number of customers accessing the database management system 4 is expectedly as low as on a Saturday or Sunday.

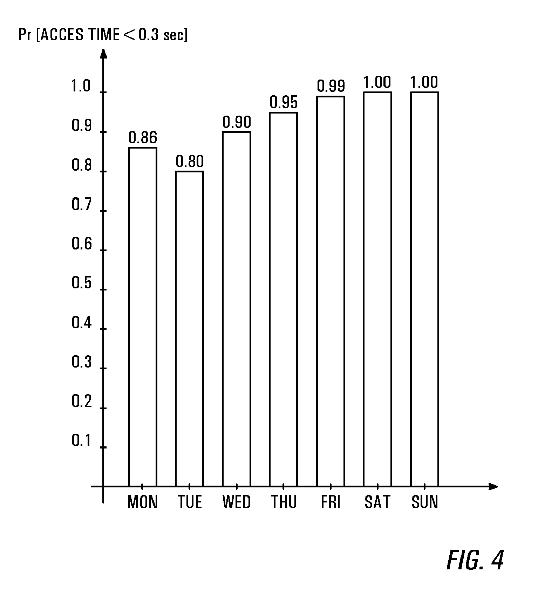

In Fig. 4, a statistic is given which represents a further processing of the exemplary data of the diagram of Fig. 3 in that the cyclical behavior of the access time metric is used to draw probable conclusions concerning the access time of the database management system 4. The statistic of Fig. 4 is obtained from the statistic of Fig. 3 by dividing all days, for which measured average access times are known, into equivalent sub-periods. In the example, the equivalent sub-periods are the days of a week, i.e. all average access times of all the Mondays, all the Tuesdays, etc. are put into one equivalence class (equivalent sub-period), respectively, and it is determined for each equivalence class in how many cases of all the average database access times within one equivalence class the average database access time is less than or equal to 0.3 seconds. Thereby, the probabilities of Fig. 4 are determined by resorting to frequencies known from the past. The probability of 0.86 determined for "Monday" in Fig. 4 means, for example, that in 86% of all average access times of all Mondays (see statistic of Fig. 3: 06/27, 07/04, 07/10 etc.) known from the past, the database access time was below 0.3 seconds. For example, the average access time of Monday 06/27 is counted as non-compliant with the service-quality condition, whereas Monday 07/04 is counted as compliant. In the statistic of Fig. 4, probabilities indicate that, for each day of the week, the service-quality parameter meets the service-quality objective, i.e., in the example given, that the average access time to the database management system 4 is less than or equal to 0.3 seconds. In the given example, an average access time of less than 0.3 seconds is always the case on non-workdays (according to the statistic, i.e. the probability is 1), while on workdays, this condition cannot always be complied with (i.e. the probability is smaller than 1).

Alternatively, a statistic, like the one of Fig. 4, may be obtained based on a statistic indicating for each day the frequency that the service-quality condition has been complied with. Then, by pooling the frequencies of all Mondays, Tuesdays, Wednesdays together, and dividing them by the number of all service-quality parameter values of all Mondays, Tuesdays, Wednesdays, etc. a probability may be obtained indicating that the service-quality condition is compliant on a Monday, Tuesday, etc. This approach renders calculating average values for each individual day unnecessary.

It should be mentioned that the statistic of Fig. 4 is based on a longer observation period of the behavior of the access time to the database management system 4 than the observation period of Fig. 3. Since the statistic of Fig. 4 relates to a weekly rhythm, holidays, such as Independence Day, are, in some embodiments, not considered when making the statistic. In some of the embodiments, however, when referring to a statistic with a yearly rhythm (whereby the recurring time interval is a year and all days with the same day and month of different years (01/01/2000, 01/01/2001, 01/01/2002, etc.) are associated with the same sub-period), holidays that occur on the same day every year are not removed since they do not disturb the typical rhythm of a year.

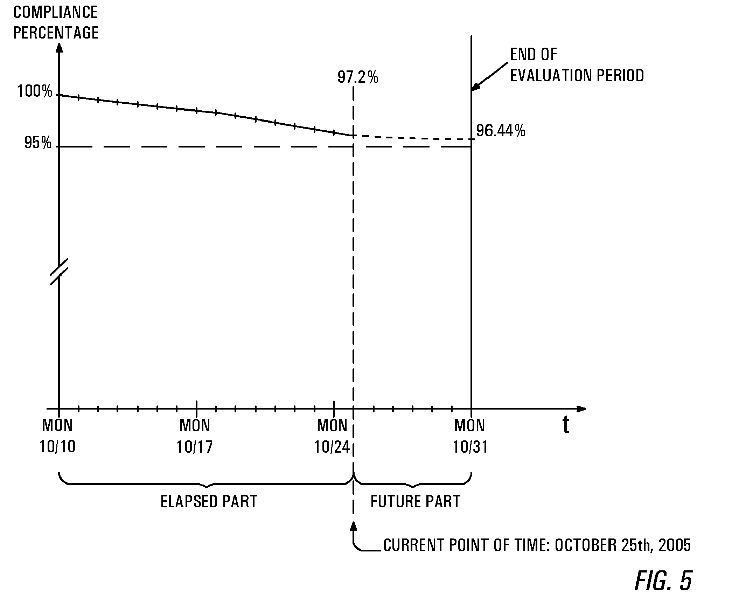

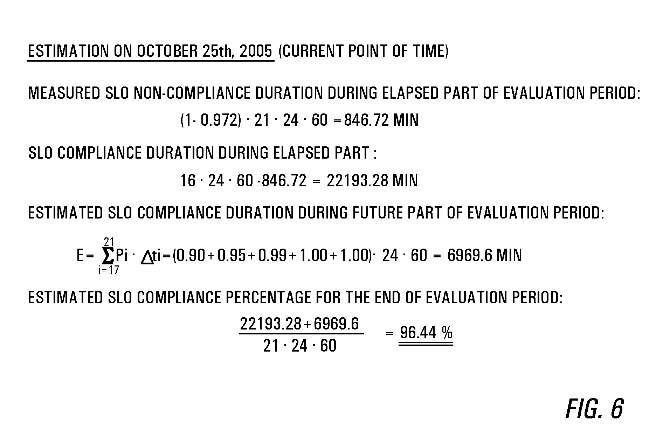

In Fig. 5, compliance percentages are indicated in the time interval from October 10th to 31 st 2005 which is the exemplary evaluation period for which the compliance of the service level objective 10, as mentioned in Fig. 2, has been agreed upon between the service provider and the customer 6.1. In the example shown, the current point of time is Tuesday, October 25th 2005, which means that 15 days of the agreed evaluation period have passed and 6 days are still to come. The compliance percentage of the service-quality condition is 97.2% at the current point of time, which is a measured result, whereas the estimated compliance percentages for the future part of the evaluation periods are based on prediction and are calculated by means of the statistic shown in Fig. 4. The calculation of the estimated compliance percentage for the end of the evaluation period will be explained in more detail in Fig. 6. The compliance percentages (of both the elapsed and the future part) are indicated with reference to the entire evaluation period and not with reference to the elapsed part of the evaluation period. This implies that the function indicating the compliance percentages is monotonically decreasing, whereas, if one indicated compliance percentages with reference from the beginning of the time interval until the current point of time, the function could also increase. At the current point of time, an estimation on whether the target SLO compliance percentage of 95.0%, as mentioned in Fig. 2, is likely to be fulfilled is calculated.

The calculation of the estimation is elucidated in Fig. 6. First, the SLO non-compliance duration of the service-quality condition during the elapsed part of the evaluation period is calculated. As mentioned above, the indication of the compliance percentage is related to the entire evaluation period. Then, an SLO compliance duration in the elapsed part is calculated. Subsequently, an estimated compliance duration is calculated for the future part of the evaluation period. This calculation involves the statistic of Fig. 4. It is determined which days (sub-periods) are still to come in the evaluation period agreed upon. These days are Wednesday, Thursday, Friday, Saturday and Sunday (the days 17 to 21 of the evaluation period). Now, an expectancy value, which is the sum of probabilities of compliance of the individual sub-periods multiplied by the lengths of the sub-periods, is calculated for the future part of the evaluation period. Equivalently, to calculate the SLO non-compliance (violation) duration for the future part, the complementary probability (which is 1 minus the compliance probability) for each sub-period is used instead. Then, the compliance time for the entire evaluation period is calculated by adding the SLO compliance duration during the elapsed part with the estimated compliance duration during the future part. This value is put in relation to the length of the entire evaluation period to obtain an estimated compliance percentage for the end of the evaluation period. In the embodiment, the calculated estimated compliance percentage (96.44%) for the end of the evaluation period is greater than the compliance percentage agreed upon (95.0%), so that the agreement will not be violated, as the situation currently appears. As time progresses, the calculations get more precise since they are increasingly based upon measured values and decreasingly based upon probabilistic values of the statistic.

Fig. 7a shows another example of the service level objective 10 of Fig. 1. This service level objective is more complex than the one shown in Fig. 2 and is agreed upon between the provider and a customer 6.1. In the example, the customer 6.1 wishes to run a distributed application program and, to this end, rents the web server 3.5, the mainframes 3.3 and 3.4 and the database management system 4 for the time interval July 26th to July 28th 2005, i.e. three complete days, which is the evaluation period of the example. In an SLA, the customer 6.1 and the provider stipulate that the service is considered to be "available" at a point of time, if the access time to the database management system 4 from the SAP of customer 6.1 is less than 0.3 seconds AND the access time to the web server 3.5 is less than 0.1 seconds AND either mainframe 3.3 or mainframe 3.4 (or both) are up. In this complex service level objective, the service-quality parameter is composite since it does not only refer to one metric, but involves several metrics. The provider commits himself/herself to an availability compliance percentage of greater than or equal to 98.0% of the evaluation period. Determining whether the service is available at a point of time is done by obtaining metric values from the metric adapters, inserting the metric values into the service-quality condition and evaluating it.

Fig. 7b shows an equivalent tree representation of the service-quality condition of Fig. 7a. The metric values are inserted on the leaf-level and are compared with threshold values. The boolean values obtained from the comparison are combined by logical operators finally yielding a value which is associated to a node on the second-highest level of the tree corresponding to the service-quality parameter. Then, the evaluated service-quality parameter is compared to a service-quality objective (which is "1" in the given example, in the sense of a logical "True", meaning that the service is available) to determine whether the service is available. If, for instance, the database access time is 0.2 seconds, the web server access time is 0.08 seconds, mainframe 3.4 is up and mainframe 3.5 is down, then the service is considered to be available. If, however, the database access time is 0.2 seconds, the web server access time is 0.09 seconds, and both mainframes 3.3, 3.4 are down, then the service is considered to be unavailable.

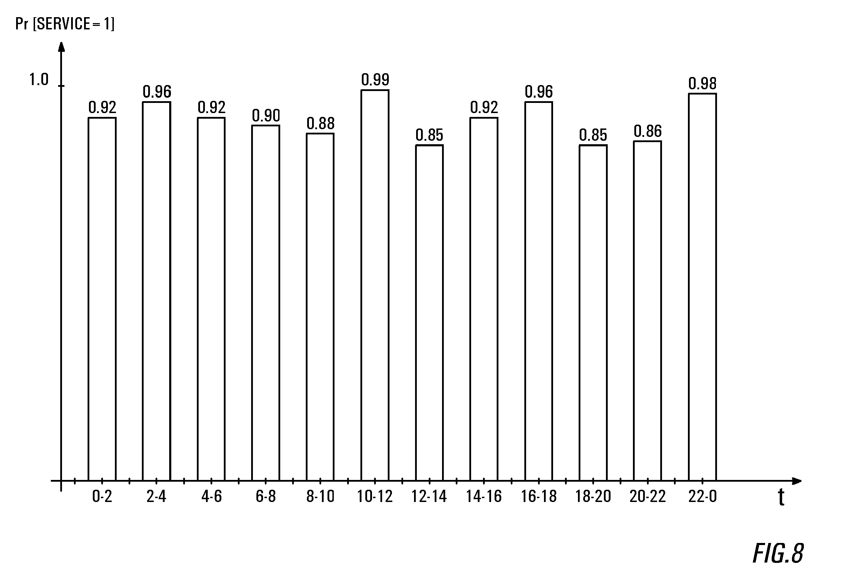

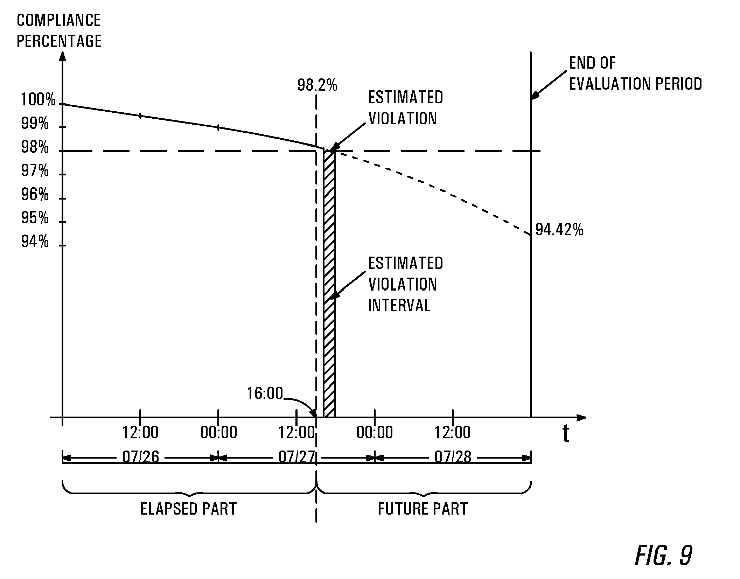

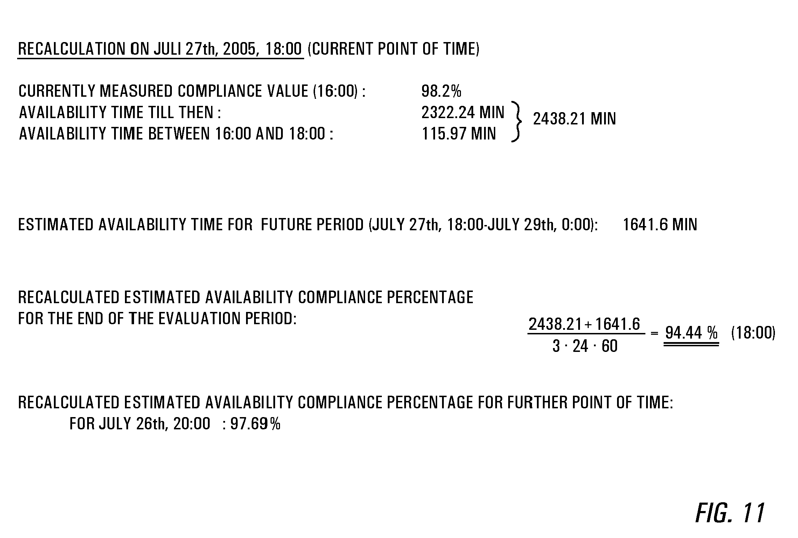

The subject-matter described below in connection with Figures 8 to 11 mainly corresponds to that already described in Figures 3 to 6, but now using the composite service-quality parameter of Figs. 7a and b as the input, rather than the elementary service-quality parameter of Fig. 2. The Figures 8 to 11 correspond to Figures 3 to 6 with the following additions: (i) the analogue to Fig. 8 is actually not Fig. 3 (the measured service-quality parameter values), but Fig. 4 (the probabilities derived from them); the measured service-quality parameters for this second example are actually not explicitly shown in a separate figure; (ii) the equivalent sub-period shown in Fig. 4 is now a two-hour interval (rather than a day, as in Figs. 3 and 4); (iii) in the present example shown in Fig. 9, the target service level objective compliance is not met, contrary to the example of Fig. 5; in addition, the expected point of time when the violation will occur is also indicated, (iv) an additional figure, Fig. 11, illustrates a re-calculation of the predicted compliance at another point of time.

In Fig. 8, similar to Fig. 4, a diagram indicates the probabilities that the service, as defined in Figs. 7a and b, is available within a two-hour sub-period of a day. This statistic is based upon the observation that the service availability is subject to a daily-cyclical rhythm (compared to the weekly-cyclical behavior of the service-quality condition, as shown in Fig. 3). Analogously to Fig. 4, this statistic is obtained by calculating frequencies of service-quality compliance (in the example, service-availability compliance) in the past by adding the measured service-quality parameters in equivalent periods (in the example, 2-hour-periods) and considering these frequencies as probabilities. A probability of 0.88 for the sub-period of 8:00 to 10:00 means that in all these time intervals (regarded over several days), the points of time are counted in which the service is available (as defined in Figs. 7a and b) and is put in relation to all points of the time intervals.

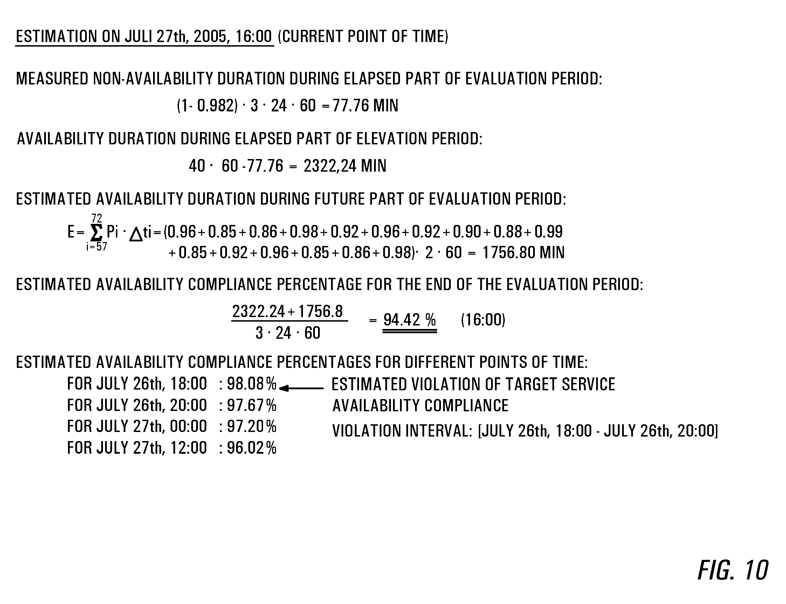

Fig. 9 shows compliance percentage as a function over the evaluation period agreed upon in the service level agreement (July 26th to July 28th 2005). At the current point of time, which is July 27th 2005 at 16:00, a compliance percentage of 98.2% is measured. This compliance percentage refers to the entire evaluation period and not to the elapsed part of the evaluation period. Now, an estimation is made on whether the service level objective which requires a target SLO compliance percentage of 98.0% is likely to be met at the end of the evaluation period. As can be taken from the compliance percentage function, an estimated compliance percentage of 94.42% is calculated. Since the service level objective will apparently not be complied with at the end of the evaluation period, an estimated violation interval, during which the point of time occurs after which the service level objective is likely to be violated, is also calculated. To this end, an estimated availability percentage is calculated for some points of time in the future part of the evaluation period starting with points of time close to the current point of time and gradually progressing towards the end of the time interval until a point of time is reached, at which the availability percentage is under 98.0% and a previous point of time, at which service availability is above 98.0%. Then, it can be appraised that the availability percentage is likely to be breached within the time interval defined by these two points of time. In the example, this time interval is on July 27th 2005, between 18:00 and 20:00. Its calculation will be elucidated in Fig. 10.

Fig. 10 shows in detail how the estimation of the compliance percentage for the end of the evaluation period of the service is calculated. This calculation is related to the current point of time, which is July 27th 2005, 16:00. First, the time period is calculated, during which the service has not been available during the elapsed part of the evaluation period. Then, an estimation of the availability time during the future part of the evaluation period is calculated. To this end, an expectancy value of the availability time is calculated by summing up the products of the probabilities taken from Fig. 8, of the sub-periods still to come and the lengths of the sub-periods. Finally, the availability times of the elapsed and the future part of the evaluation period are added to obtain the total availability time. This time is put in relation to the length of the entire evaluation period. In the given example, a percentage value of 94.42% results from the calculation performed at the current point of time, 16:00. Since an availability percentage of 98.0% has been agreed upon between the customer and the provider, the SLO will probably be violated at the end of the evaluation period, as the situation currently appears. Accordingly, the violation interval is calculated, during which the SLO is likely to be violated. To this end, an estimated availability percentage is calculated for some points of time in the future part of the evaluation period starting with points of time close to the current point of time and gradually progressing towards the end of the time interval until a point of time is reached, at which the availability percentage is under 98.0% and a previous point of time, at which service availability is above 98.0%. Then, it can be appraised that the availability percentage is likely to be breached within the time interval defined by these two points of time. It is pointed out that an estimation relates to a point of time during the time interval at which the estimation is made, based upon a measured availability during an elapsed part of the evaluation period and an estimated availability based on probabilities taken from a current statistic.

Fig. 11 illustrates a re-calculation of the expected compliance percentage two hours after the calculations explained in Fig. 10. Two hours later, the measured availability refers to a longer elapsed part of the evaluation period, whereas the estimated availability refers to a future part of the evaluation period which is now two hours shorter. Therefore, the result calculated at 18:00 will be more accurate than the result calculated at 16:00. In general, it is commensurable to state that the accuracy increases as the end of the evaluation period approaches. At 16:00, the currently measured compliance value for the elapsed part is 98.2%. This corresponds to a measured availability time of 2322.24 minutes. The measured availability time between 16:00 and 18:00 is 115.97 minutes. The statistic of Fig. 8 is permanently updated as soon as new metric values arrive at the metric collector 2. The availability time between the beginning of the time interval and July 27th, 18:00 is 2438.21 minutes. The estimated availability time for the future part of the evaluation period (which is July 27th, 18:00 to July 29th, 0:00) is 1641.60 minutes. This value is calculated in analogy to the estimated availability time in Fig. 10, except that the sum of the expectancy value does not include the first addend which refers to the sub-period 16:00 to 18:00 since it now belongs to the elapsed part of the evaluation period. The re-calculation yields an expected compliance percentage of 94.44% at the point of time July 27th 2005, 18:00. In comparison to the point of time two hours before (cf. Fig. 10), the compliance percentage has been corrected upwardly by 0.02 percentage points. In order to calculate the violation interval, an expected compliance percentage is calculated for 20:00 yielding a value of 97.69%. Therefore, although the accuracy of the calculation has increased, the estimated point of time, at which the SLA is likely to be breached remains between 18:00 and 20:00.

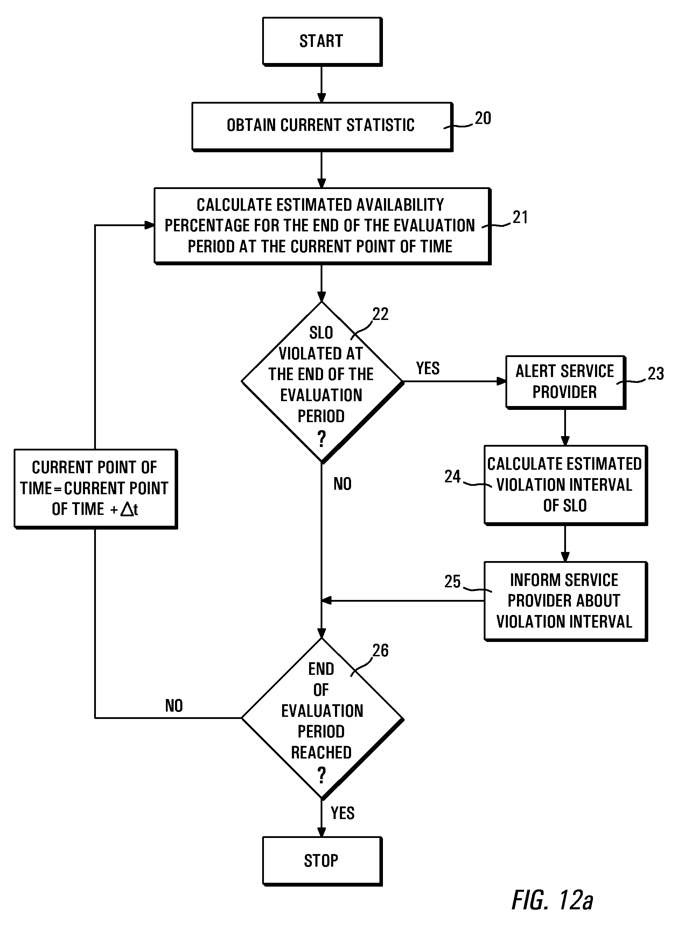

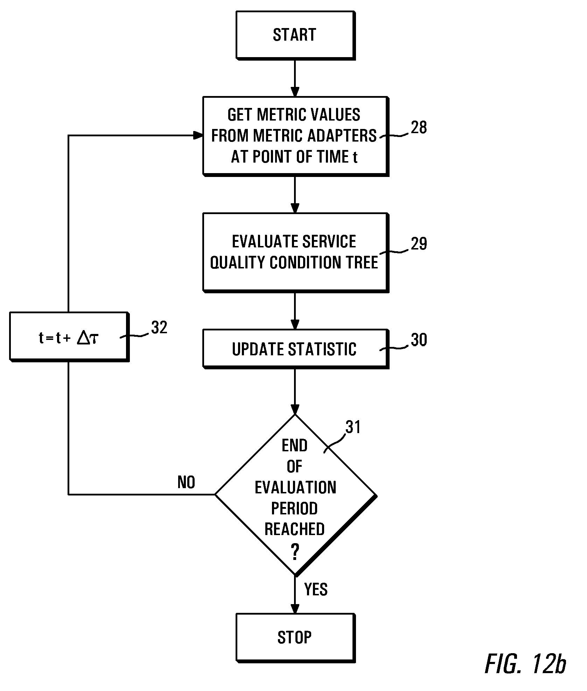

Fig. 12a shows a flowchart indicating the course of process of estimating at a current point of time the availability percentage at the end of the time interval. At 20, a current statistic is obtained which is based on a data pool, also including very recent data. The statistic is obtained by calculating frequencies of service quality compliance in the past in equivalent sub-periods and considering these frequencies as probabilities. At 21, an estimated availability percentage is calculated for the end of the evaluation period of the service level agreement at the current point of time. At 22, it is ascertained, on the basis of the estimated availability percentage, whether the service level objective is likely to be violated at the end of the evaluation period. If the calculation yields that it is likely to be breached, then, at 23, the service provider is alerted so that s/he may proactively take countermeasures to avert the SLO violation and to thereby obviate the payment of contract penalties. There are several ways to indicate SLA compliance prediction to the user. The user may be provided with the estimated SLO compliance percentage (which the user may compare himself/herself with the target SLO compliance), with the indication whether the target SLO compliance will be complied with or not, with an indication concerning the probability that the SLO will be complied with or not at the end of the evaluation period, with an indication about the estimated time of violation and/or with the difference between the estimated SLO compliance and the target SLO compliance. All these indications are different representations of the information provided to the user with regard to a prediction of SLA compliance. In addition, at 24, the estimated violation interval is calculated. At 25, this information is also indicated to the service provider, so that s/he knows how much time is left before the SLO is violated. The information may be regarded as an indication of urgency informing the service provider about the time remaining before the probable SLO violation. If, however, the SLO will not be violated in accordance with the calculation at 21, then it is ascertained at 26 whether the end of the evaluation period has been reached. If so, then the procedure is finished. If, however, the evaluation period has not yet finished, then, at 26, the current point of time is moved forward (to indicate the progress of time) by Δt. Then, in order to close the loop, at 21 a re-calculation is performed at the new current point of time.

Fig. 12b illustrates the way new incoming metric values are handled. At 28, the metric values are received from the metric adapters at a point of time t. They are inserted into a service-quality condition tree, which is evaluated at 29 to establish whether the service is available at the point of time t. At 30, the metric values are also used to update the statistic, so that the statistic always includes the most recent metric values. At 31, it is ascertained whether the end of the evaluation period is reached. If so, then the procedure stops. Otherwise, at 32, the point of time is moved forward by Δτ, at which again new metric values are received by the metric collector 2 from the metric adapters 9.

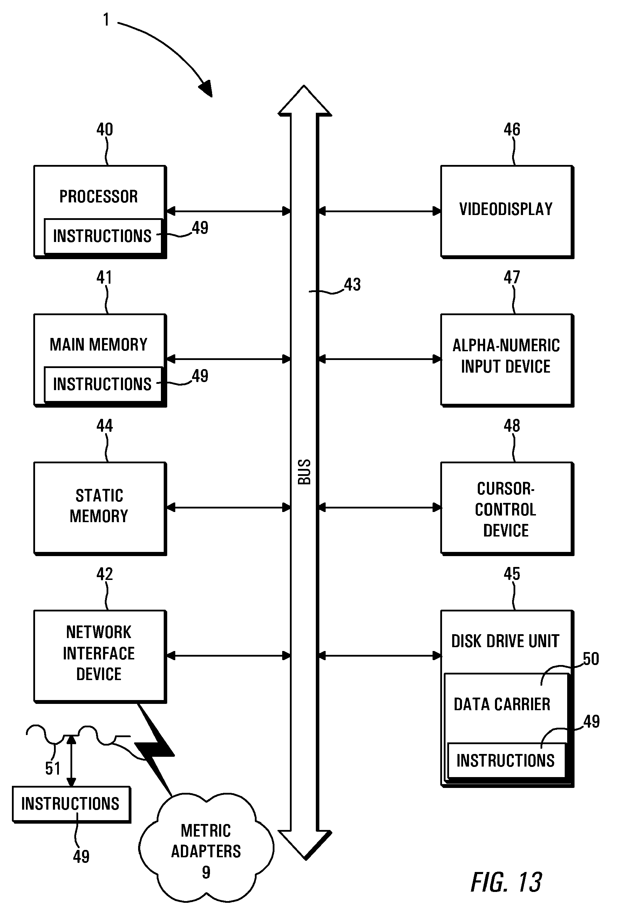

Fig. 13 is a diagrammatic representation of a computer system which provides the functionality of the SLA reporting station 1 of Fig. 1, and is therefore denoted as "SLA reporting computer system 1 ". Within the SLA reporting computer system 1 a set of instructions, for causing the computer system to perform any of the methodologies discussed herein, may be executed. The SLA reporting computer system 1 includes a processor 40, a main memory 41 and a network interface device 42, which communicate with each other via a bus 43. Optionally, it may further include a static memory 44 and a disk drive unit 45. A video display 46, an alpha-numeric input device 47 and a cursor control device 48 may form a SLA reporting user interface. The network interface device 42 connects the SLA reporting computer system 1 to the metric adapters 9 and the managed IT infrastructure. A set of instructions (i.e. software) 49 embodying any one, or all, of the methodologies described above, resides completely, or at least partially, in or on a machine-readable medium, e.g. the main memory 41 and/or the processor 40. A machine-readable medium on which the software 49 resides may also be a data carrier 50 (e.g. a non-removable magnetic hard disk or an optical or magnetic removable disk) which is part of disk drive unit 45. The software 49 may further be transmitted or received as a propagated signal 51 via the Internet and the IT network through the network interface device 42.

Thus, the embodiments of the invention described above allow for a more precise SLA compliance prediction by taking into account cyclic variations, such as workdays in contrast to weekends, of a service-quality parameter.

All publications and existing systems mentioned in this specification are herein incorporated by reference.

Although certain methods and products constructed in accordance with the teachings of the invention have been described herein, the scope of coverage of this patent is not limited thereto. On the contrary, this patent covers all embodiments of the teachings of the invention fairly falling within the scope of the appended claims either literally or under the doctrine of equivalents.

## Claims

1. A method of predicting a degree of service-quality compliance in an IT infrastructure, the method being carried out at a current point of time within an evaluation period before the end of the evaluation period, wherein service-quality compliance means that a service-quality parameter of the IT infrastructure complies with a service-quality objective, the method comprising:
obtaining a statistic indicating probabilities that the service-quality parameter will comply with the service-quality objective in sub-periods of the future part of the evaluation period, the statistic being based on known compliance frequencies in equivalent sub-periods in the past, and
calculating, on the basis of the statistic, an estimated duration in which the service-quality objective will be complied with during the future part of the evaluation period.

2. The method of claim 1, wherein a service level objective is a service-quality parameter, considered over the evaluation period, in comparison to a target service level objective compliance, and a measured duration in which the service-quality objective has been complied with during the elapsed part of the evaluation period is added to the estimated duration in which the service-quality objective will be complied with during the future part of the evaluation period to calculate an estimated service level objective compliance for the end of the evaluation period.

3. The method of claim 1 or claim 2, wherein the service-quality parameter is availability and the service-quality objective is complied with in response to a service being available.

4. A method of predicting a degree of service availability compliance in an IT infrastructure, the method being carried out at a current point of time within an evaluation period before the end of the evaluation period, wherein service availability compliance means that a service of the IT infrastructure is available, the method comprising:
obtaining a statistic indicating probabilities that a service will be available in sub-periods of the future part of the evaluation period, the statistic being based on known availability frequencies in equivalent sub-periods in the past, and
calculating, on the basis of the statistic, an estimated duration in which the service will be available during the future part of the evaluation period.

5. The method as claimed in any preceding claim, wherein the service-quality parameter is based on a single metric.

6. The method as claimed in any preceding claim, wherein the service-quality parameter is a complex condition based on several metrics.

7. The method as claimed in any preceding claim, wherein a recurring time interval is determined by analyzing cyclic patterns of the service-quality parameter, and the recurring time interval is divided into the equivalent sub-periods.

8. The method of claim 7, wherein the cyclic patterns of the service-quality parameter pertains to a daily, weekly, monthly, quarterly or yearly time interval.

9. The method of claim 7, wherein, in response to the estimated service level objective compliance being insufficient with regard to the target service level objective compliance, an estimated violation interval is calculated, indicating an interval during which a point of time occurs after which the service level objective is violated.

10. The method of claim 3, wherein the violation interval is narrowed down to a violation point of time.

11. The method of claim 8, wherein a user is alerted, in response to the estimated service level objective being insufficient with regard to the target service level objective compliance and the user is informed about the estimated violation interval.

12. The method of any preceding claim, wherein the statistic is permanently updated in response to calculating new service-quality parameters.

13. The method of any preceding claim, wherein holidays are not considered in the statistic in response to the future part of the evaluation period not comprising any holidays.

14. The method of any preceding claim, wherein the estimated duration is calculated by means of the expectancy value, which is defined as the sum of the probabilities that the service-quality objective is complied with multiplied by the lengths of the sub-periods of the future part of the evaluation period.

15. The method of any preceding claim, wherein the estimated duration in which the SLO is complied with is re-calculated periodically in order to increase its accuracy as time progresses within the evaluation period.

16. The method of any preceding claim, wherein the statistic is obtained from a service level management reporting datamart which stores historical data.

17. A computer system for predicting a degree of service-quality compliance in an IT infrastructure at a current point of time within an evaluation period before the end of the evaluation period, wherein service-quality compliance means that a service-quality parameter of the IT infrastructure complies with a service-quality objective, the computer system being programmed to:
obtain a statistic indicating probabilities that the service-quality parameter will comply with the service-quality objective in sub-periods of the future part of the evaluation period, the statistic being based on known compliance frequencies in equivalent sub-periods in the past, and to
calculate, on the basis of the statistic, an estimated duration in which the service-quality objective will be complied with during the future part of the evaluation period.

18. A computer program product which is either in the form of a machine-readable medium with program code stored on it, or in the form of a propagated signal comprising a representation of program code,
wherein the program code is arranged to carry out a method, when executed on a computer system, of predicting a degree of service-quality compliance in an IT infrastructure at a current point of time within an evaluation period before the end of the evaluation period, wherein service-quality compliance means that a service-quality parameter of the IT infrastructure complies with a service-quality objective, the method comprising:
obtaining a statistic indicating probabilities that the service-quality parameter will comply with the service-quality objective in sub-periods of the future part of the evaluation period, the statistic being based on known frequencies in equivalent sub-periods in the past, and
calculating, on the basis of the statistic, an estimated duration in which the service-quality objective will be complied with during the future part of the evaluation period.
